# EUROPÄISCHE PATENTSCHRIFT

(11) **EP 3 008 988 B1**
(45) Veröffentlichungstag und Bekanntmachung des Hinweises auf die Patenterteilung: **04.07.2018**
(21) Anmeldenummer: 15188517.5
(22) Anmeldetag: 06.10.2015
(51) Int. Cl.: A01C 7/10

(54) **VERFAHREN UND VORRICHTUNG ZUR REGELUNG VON MASSETEILCHEN**
METHOD AND DEVICE FOR REGULATING MASS PARTICLES
PROCEDE ET DISPOSITIF DE REGLAGE DE PARTICULES

(30) Priorität: 16.10.2014 DE 102014115020
(43) Veröffentlichungstag der Anmeldung: 20.04.2016
(73) Patentinhaber: Müller-Elektronik GmbH & Co. KG, 33154 Salzkotten (DE)
(72) Erfinder: Meyer zu Hoberge, Sebastian, 33106 Paderborn (DE); Liebich, Martin, 36287 Breitenbach (DE)
(74) Vertreter: Ostermann, Thomas

(56) Entgegenhaltungen:
- EP-A2- 0 158 985
- WO-A1-2015/058735
- DE-A1- 10 350 542
- DE-A1- 19 946 410
- DE-A1-102006 038 865

## Beschreibung

Die Erfindung betrifft ein Verfahren zur Regelung von auszubringenden Masseteilchen in Sämaschinen nach dem Oberbegriff des Patentanspruchs 1.

Ferner betrifft die Erfindung eine Vorrichtung zur Regelung von auszubringenden Masseteilchen in Sämaschinen nach dem Oberbegriff des Patentanspruchs 6.

Aus der DE 10 2004 004 730 A1 ist ein Verfahren zur Regelung von auszubringenden Masseteilchen in Sämaschinen bekannt, bei dem die Ausbringmenge während des Säens in Abhängigkeit von einem vorher durchgeführten Kalibriervorgang festgelegt ist. Wird während des Sävorganges festgestellt, dass die Ausbringmenge eine zu große Abweichung von dem ermittelten Kalibrierwert hat, ist eine erneute Kalibrierung erforderlich. Dieser Kalibriervorgang erfolgt während der Fahrt bei verminderter Geschwindigkeit. Nachteilig an dem bekannten Verfahren ist, dass keine durchgehende Regelung der Ausbringmenge während des Sävorganges bereitgestellt wird.

Aus der DE 10 2011 010 100 A1 ist ein Verfahren und eine Vorrichtung zur Regelung von auszubringenden Masseteilchen in Sämaschinen bekannt, bei dem eine Fahrgeschwindigkeit der Sämaschine in Abhängigkeit von Qualitätsparametern geregelt wird. In die Qualitätsparameter fließt die Erfassung der einzelnen Masseteilchen sowie der Betriebszustand der Säaggregate ein. Nachteilig an dem bekannten Verfahren ist, dass für einen optimalen Sävorgang der Fahrer keinen Einfluss auf die Fahrgeschwindigkeit nehmen kann.

Aus der DE 10 2006 038 865 A1 ist ein Verfahren zur Regelung von auszubringenden Masseteilchen in Sämaschinen bekannt, bei dem ein adaptiver Regler mit einem Fuzzy Logic-Baustein eingesetzt wird. Mittels des adaptiven Reglers ist die Drehzahl einer Dosiereinrichtung regelbar, wobei eine Stellgröße in Abhängigkeit von einer Soll-Ausbringmenge bestimmt wird. Nachteilig an dem bekannten Verfahren ist, dass der Regelaufwand relativ groß ist, wobei Werte mehrerer Betriebsparameter beim Regelungsvorgang berücksichtigt und mehrere Stellgrößen der Sämaschine gleichzeitig angesteuert werde müssen. Die verschiedenen Stellgrößen werden somit komplex in Abhängigkeit der Istwerte mehrerer Betriebsparameter verändert, um die gewünschte Ausbringmenge zu erzielen.

Aus der DE 103 50 542 A1 ist ein Verfahren und Vorrichtung zur Regelung von auszubringenden Masseteilchen in Sämaschinen bekannt, die eine Regeleinrichtung zur Ermittlung einer Stellgröße für eine Dosiereinrichtung in Abhängigkeit von einer Soll-Ausbringmenge der Masseteilchen vorsieht. An den Regler der Regeleineinrichtung erfolgt lediglich eine Zuführung einer Regeldifferenz, die aus einer Soll-Ausbringmenge und einer Ist-Ausbringmenge besteht.

Aufgabe der vorliegenden Erfindung ist es, ein Verfahren und eine Vorrichtung zur Regelung von auszubringenden Masseteilchen in Sämaschinen anzugeben, so dass auf einfache und genaue Weise eine Ausbringung von Saatgut während eines Sävorgangs erreicht wird.

Zur Lösung der Aufgabe weist das erfindungsgemäße Verfahren die Merkmale des Patentanspruchs 1 auf.

Der besondere Vorteil des erfindungsgemäßen Verfahrens besteht darin, dass eine robuste und kompakte Regelung bereitgestellt wird, die einen genauen Austrag von Masseteilchen ermöglicht. Basis für die genaue Regelung ist die Messung der aktuell ausgebrachten Masseteilchen mittels einer Sensorvorrichtung, die alle ausgebrachten Masseteilchen erfasst. Nach der Erfindung erfolgt die Regelung auf Basis eines Sollwertes, wobei der Sollwert vorzugsweise in der Einheit Masseteilchen pro Zeit angegeben ist. Bei einer Sämaschine ermöglicht die Erfindung eine einfache Bestimmung sowohl einer Längs- als auch einer Querverteilung des Saatguts.

Nach einer Weiterbildung der Erfindung wird die Ist-Ausbringmenge durch Zählen von Masseteilchen-Impulsen in der Sensoreinrichtung gemessen, wobei ein gemessener Zeitabstand zwischen den Masseteilchen-Impulsen und/oder durch Vergleich von einer Anzahl von gezählten Masseteilchen pro Zeiteinheit ein Maß für die Verteilgenauigkeit in Fahrtrichtung einer Sämaschine liefern. Vorteilhaft kann hierdurch qualitativ eine Aussage für die Längsverteilung eines Saatgutes getroffen werden.

Zur Lösung der Aufgabe weist die erfindungsgemäße Vorrichtung die Merkmale des Patentanspruchs 6 auf.

Der besondere Vorteil der erfindungsgemäßen Vorrichtung besteht in einer einfachen und robusten Regelungsschaltung. Nach der erfindungsgemäßen Vorrichtung weist die Regeleinrichtung eine Wandler- und/oder Verstärkereinheit auf, mittels derer die Soll-Ausbringmenge in eine für einen Regler angepasste Führungsgröße umgewandelt wird. Ferner ist die Wandler- und/oder Verstärkereinheit mit einem Kalibrierfaktor zur Einstellung eines Startwertes für eine Soll-Drehfrequenz zu Beginn eines Sävorganges sowie einem Korrekturfaktor zur Korrektur des Kalibrierfaktors während des Sävorganges beaufschlagbar. Vorteilhaft kann die Dosiereinrichtung mit einer an den Saatguttyp angepassten Dosierer-Drehzahl angesteuert werden. Bei einem Saatgutwechsel während des Sävorganges erfolgt selbsttätig ein Einschwingen der auf die Dosiereinrichtung wirkenden Stellgröße in den entsprechenden Ausbringmengenbereich. Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

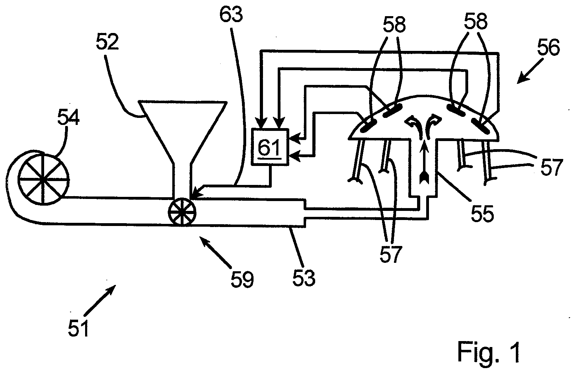

- Figur 1: eine schematische Darstellung einer Sämaschine,
- Figur 2: ein Blockschaltbild einer Regeleinrichtung,
- Figur 3: eine Darstellung eines Einregelprozesses bei Wechsel von einem ersten Saatgut in ein zweites Saatgut,
- Figur 4: ein vergrößerter Querschnitt eines winkelförmigen Leitungsabschnittes, in dem zur vereinfachten Darstellung Bauelemente eines im Eckbereich angeordneten Sensorelementes explosionsartig nebeneinander dargestellt sind und
- Figur 5: eine schematische Vorderansicht der Bauelemente des Sensorelementes.

Eine Vorrichtung zur Regelung von auszubringenden Masseteilchen ist vor zugsweise in einer Sämaschine 51 integriert angeordnet, wobei die Sämaschine 51 als Saatgutkörner ausgebildete Masseteilchen entsprechend einer vorgegebenen Soll-Ausbringmenge abgibt. Alternativ können die Masseteilchen auch als granularer Dünger oder als Pflanzenschutzmittel ausgebracht werden, beispielsweise auch mittels eines Pneumatikstreuers. Die Sämaschine 51 weist einen Saatgutspeicher 52 auf, in dem die Saatgutkörner vorgehalten werden. Ferner weist die Sämaschine 51 eine Leitung 53 auf, die an einem Gebläse 54 angeschlossen ist. Das Gebläse 54 erzeugt einen Luftstrom in der Leitung 53, der über einen Anschluss des Saatgutspeichers 52 die Körner des Saatguts mitreißt und über ein Steigrohr 55 einer Verteileinrichtung 56 (Verteilerkopf) zuführt, an der die Saatgutkörner auf mehrere Verteilleitungen 57 in Richtung von Ausbringelementen (Säscharen) aufgeteilt werden. Mittels einer Sensoreinrichtung 58 werden die über das Steigrohr 55 zugeführten Körner erfasst. Die Sensoreinrichtung 58 (Sensor) ist vorzugsweise in der Verteileinrichtung 56 integriert angeordnet. Alternativ kann die Sensoreinrichtung 58 auch in mindestens einer Verteilleitung 57, in der Nähe der Verteileinrichtung 56 oder auch nahe der Ausbringelemente (Säscharen), angeordnet sein. Sie wird später noch detailliert beschrieben.

Ferner ist eine Dosiereinrichtung vorgesehen, welche als Dosierer 59 ausgebildet sein kann, und mittels derer die Masseteilchen mengenmäßig in den Luftstrom der Leitung 53 zugegeben werden. Alternativ oder zusätzlich können Stellglieder in den Verteilleitungen 57, beispielsweise durch Veränderung des Querschnitts der Verteilleitung 57, die mengenmäßige Zuführung des Saatgutes in den Verteilleitungen steuern. Durch beide genannten Maßnahmen lässt sich der Volumenstrom der Masseteilchen bzw. des Saatgutes verändern, so dass bei entsprechender Beaufschlagung der Stelleinheiten die Ausbringmenge der Masseteilchen geregelt werden kann. Ergänzend kann eine Drehzahl des Gebläses 54 verändert bzw. geregelt werden, um den Luftvolumenstrom auf einen optimalen Wert einzustellen.

Im vorliegenden Ausführungsbeispiel weist die Dosiereinrichtung einen Dosierer 59 auf, der im Bereich eines Anschlusses des Saatgutspeichers 52 an der Leitung 53 angeordnet ist. Die Dosiereinrichtung weist einen dem Dosierer 59 zugeordneten Stellmotor 60 auf, der ein Dosierrad antreibt, wobei mit steigender Drehzahl des Stellmotors 60 die Zuführmenge des Saatguts in der Leitung 53 ansteigt.

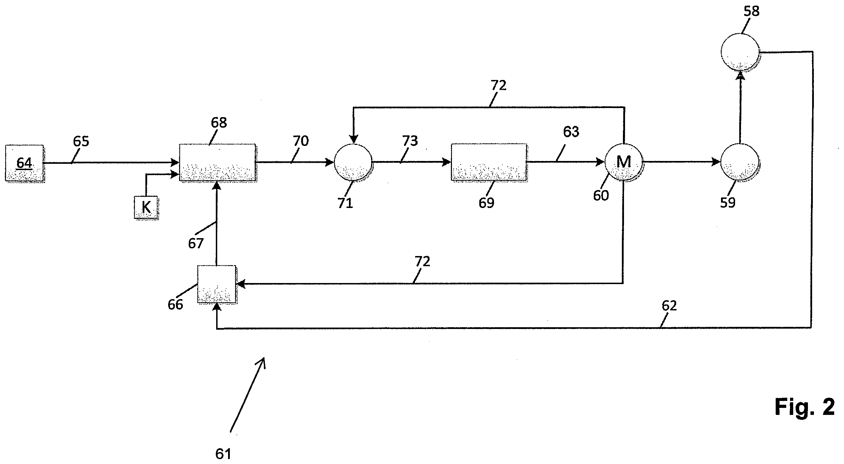

Eine Regeleinrichtung 61 ist zum einen mit der Sensoreinrichtung 58 (Sensor) und zum anderen mit dem Stellmotor 60 des Dosierers 59 verbunden. Die Sensoreinrichtung 58 ermittelt die Ist-Ausbringmenge 62 des Saatguts in der Einheit Körner pro Zeit. Die Regeleinrichtung 61 erzeugt eine Stellgröße 63, die an den Eingang des Stellmotors 60 übertragen wird. Der Aufbau der Regelung der auszubringenden Saatgutkörner ist in Figur 2 näher dargestellt.

Die Regeleinrichtung 61 umfasst einen Sollwertgeber 64, der eine Soll-Ausbringmenge 65 von Saatgutkörnern erzeugt. In den Sollwertgeber 64 können Parameter der Geschwindigkeit der Sämaschine und die Arbeitsbreite einfließen. Der Sollwertgeber 64 stellt die Soll-Ausbringmenge 65 in der Einheit Körner pro Zeit zur Verfügung. Die Soll-Ausbringmenge 65 wird an den Eingang einer Wandler- und/oder Verstärkereinheit 68 gegeben. Zusätzlich ist in der Wandler- und/oder Verstärkereinheit 68 ein Kalibrierfaktor K enthalten zur Einstellung eines Startwertes für eine Soll-Drehfrequenz 70 bzw. Soll-Ausbringmenge zu Beginn eines Sävorganges. Außerdem wird der Wandler- und/oder Verstärkereinheit 68 ein Korrekturfaktor 67 zugeführt, welcher sich während des Sävorganges aus dem Verhältnis aus Ist-Ausbringmengensignal 62 und der Ist-Drehfrequenz 72 berechnet. In der Wandler- und/oder Verstärkereinheit 68 wird aus der Soll-Ausbringmenge 65, dem Kalibierfaktor K und dem Korrekturfaktor 67 die Soll-Drehfrequenz 70 für die Drehzahlregelung 69 gebildet. Die Wandler- und/oder Verstärkereinheit 68 stellt die Soll-Drehfrequenz 70 bereit, die an einen Vergleicher 71 abgegeben wird. Die Soll-Drehfrequenz 70 entspricht einem Wert in der Einheit Umdrehungen pro Zeit. An den Vergleicher 71 ist ferner die Ist-Drehfrequenz 72 (Ist-Frequenz) des Stellmotors 60 angelegt. Aus dem Vergleich- bzw. Differenzbildung zwischen Soll-Drehfrequenz 70 und Ist-Drehfrequenz 72 wird eine Regelabweichung 73 ermittelt, die als Eingang auf den Regler 69 gegeben wird. Der Regler 69 kann als ein PI-Regler oder als ein P-Regler ausgebildet sein. Gegebenenfalls kann er auch ein Glättungsmodul aufweisen zur Glättung der Soll-Drehfrequenz 70, wenn eine stark schwankende Ist-Ausbringmenge in kurzen Zeiträumen ermittelt wird. Der Regler 69 sendet dann die Stellgröße 63 zu dem Stellmotor 60, der die Dosierung der Saatgutkörner ermöglicht.

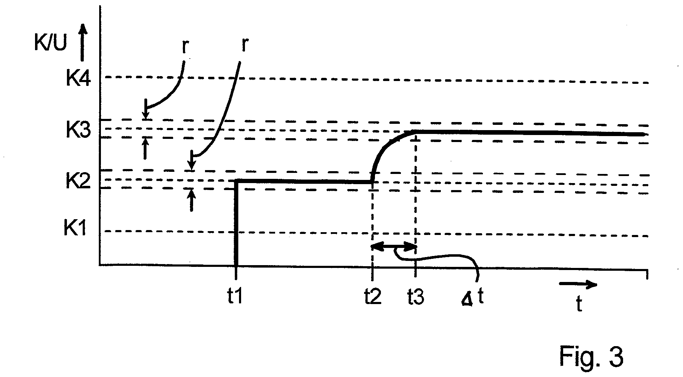

Aus Figur 3 sind saatgutabhängige Kalibrierfaktoren ersichtlich. Der Kalibrierfaktor für das Saatgut "Raps" entspricht Kalibrierfaktor K1. Der Kalibrierfaktor für das Saatgut "Gerste" entspricht Kalibrierfaktor K2. Der Kalibrierfaktor für das Saatgut "Weizen" entspricht Kalibrierfaktor K3 und der Kalibrierfaktor für das Saatgut "Roggen" entspricht Kalibrierfaktor K4. Würde zu Beginn eines Sävorganges mittels eines nicht dargestellten Bedienfeldes das Saatgut "Gerste" ausgebracht werden sollen, würde der Kalibrierfaktor K2 Vorausgewählt werden. In der Regeleinrichtung 61 wird der entsprechende Kalibrierfaktor K2 in der Wandler- und/oder Verstärker-Einheit 68 eingestellt, so dass mit Beginn des Sävorganges die Soll-Drehfrequenz 70 im Bereich innerhalb eines Regelbereiches r liegt. Dieser Regelbereich r kann im Bereich von +/- 10 bis +/- 20 Prozent bezogen auf einen mittleren Wert bzw. einem vorgegebenen Kalibrierfaktor K1, K2, K3, K4 liegen. Während des weiteren Sävorganges werden die Abweichungen von der Sollwertvorgabe mittels der Regeleinrichtung ausgeglichen.

In der Grafik der Figur 3 sind diese Abweichungen aufgrund der Skalierung nicht eingezeichnet bzw. erkennbar. Wird die Saatgutausgabe geändert, beispielsweise von dem Saatgut "Gerste" auf das Saatgut "Weizen", bei dem vergleichsweise mehrere Körner pro Umdrehungen von dem Dosierer 59 ausgebracht werden, erfolgt innerhalb einer Einschwingzeit Δt eine Änderung der Ist-Ausbringmenge. Die erfindungsgemäße Regelung ermöglicht somit nicht nur ein Ausregeln der Ausbringmenge für ein einziges Saatgut, sondern auch für mehrere Saatgutkörnertypen.

Nach einer nicht dargestellten alternativen Ausführungsform außerhalb der Erfindung kann die Ausbringmenge der Masseteilchen alternativ oder zusätzlich auch durch Variierung des Querschnitts der jeweiligen Verteilleitungen 57 geregelt werden. Die Verteilleitungen 57 können jeweils in ihrem Querschnitt so mittels eines Stellgliedes verändert werden, dass die Ausbringmenge der Masseteilchen je Verteilleitung 57 geregelt werden kann. Auf diese Weise lässt sich eine gleichmäßige Verteilung der Masseteilchen über alle Verteilleitungen erreichen. Alternativ ist auch die Regelung unterschiedlicher Ausbringmengen je Verteilleitung bzw. Spur möglich.

Ergänzend zu den beiden beschriebenen möglichen Ausführungsformen kann mit Hilfe der Signale aus der Sensoreinrichtung 58 eine Regelung des Gebläsemotors 54 und des dadurch erzeugten Luftvolumenstromes erfolgen, mit dem Ziel, den Luftvolumenstrom im Steigrohr 55 sowie in den Verteilleitungen 57 auf einen optimalen Wert einzustellen.

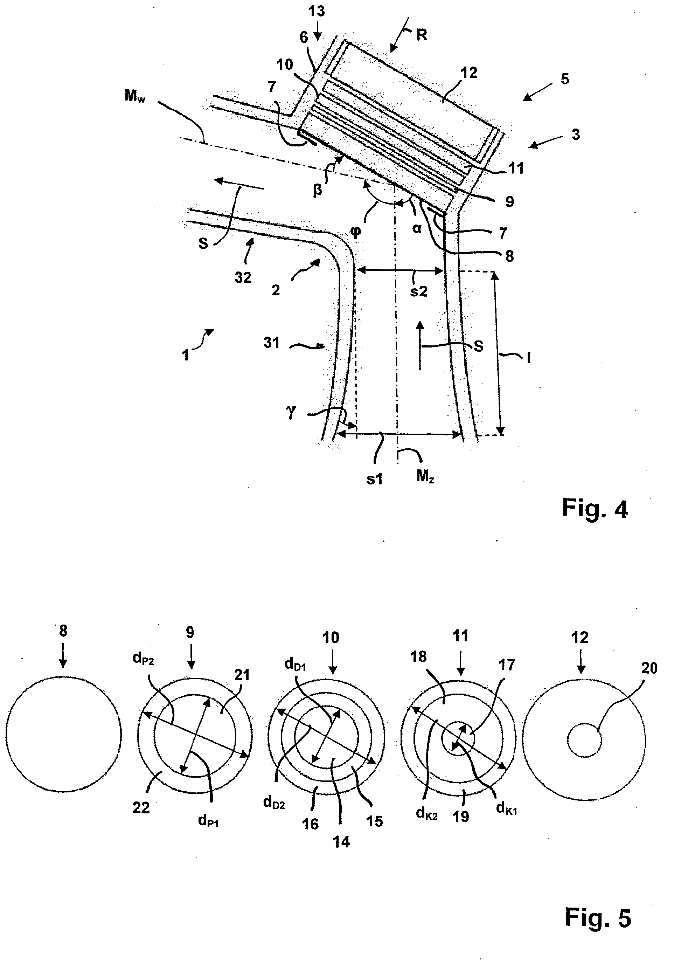

Im Folgenden wird die Sensoreinrichtung 58 anhand der Figuren 4 und 5 näher beschrieben. Die Sensoreinrichtung 58 weist mehrere Sensorelemente 3 auf, die jeweils unterschiedlichen Verteilleitungen 57 zugeordnet sind. Die Sensorelemente 3 sind in der Verteileinrichtung 56 in einem Leitungsabschnitt 1 angeordnet, in dem der die zu zählenden Masseteilchen (Saatgutkörner) mitführender Luftstrom in Strömungsrichtung S strömt. Der Leitungsabschnitt kann als Rohr starr oder als flexibler Schlauch ausgebildet sein.

Der Zuführungsabschnitt 31 und/oder der Weiterleitungsabschnitt 32 ist auf einer dem Umlenkungsabschnitt 2 abgewandten Seite mit einem nicht dargestellten geraden Leitungsabschnitt konstanten Durchmessers verbunden.

Der Leitungsabschnitt 1 ist winkelförmig angeordnet, wobei der Luftstrom im Umlenkungsabschnitt 2 von dem Zuführungsabschnitt 31 in Richtung des Weiterleitungsabschnittes 32 um einen stumpfen Winkel ϕ umgelenkt werden. An einem Außenbereich 5 des Umlenkungsabschnittes 2 ist das Sensorelement 3 angeordnet. Bauelemente des Sensorelementes 3 sind in einem Bohrungshals 6 des Umlenkungsabschnittes 2 angeordnet, wobei der Bohrungshals 6 in einem äußeren Eckbereich des Leitungsabschnittes 1 quer zu demselben abragt.

Das Sensorelement 3 ist vorzugsweise mittels eines Schraubverschlusses an dem Leitungsabschnitt 1 der Leitung 1 gelagert. Der Bohrungshals 6 weist in einem Fußbereich einen Anschlag 7 auf, an dem eine vorzugsweise scheibenförmige Prallfläche 8 des Sensorelementes 3 zur Anlage kommt. Die Prallfläche 8 bildet in der Montagelage eine Innenwandung des Leitungsabschnitts 1. Benachbart zu der Prallfläche 8 ist ein scheibenförmiges Piezoelement 9 angeordnet, an das sich ein scheibenförmiger Dämmkörper 10 und eine Kontaktierungsscheibe 11 anschließen. Die Prallfläche 8, das Piezoelement 9, der Dämpfungskörper 10 und die Kontaktierungsscheibe 11 sind in dem Bohrungshals 6 angeordnet. Als Abschluss kann außenseitig ein mit einem Innengewinde versehenes Festlegelement 12 auf den Bohrungshals 6 aufgesetzt angeordnet sein, wobei es mit einem Außengewinde 13 des Bohrungshalses 6 in Gewindeeingriff steht.

Als Abschluss des Sensorelementes 3 ist außenseitig, d. h. auf einer der Leitung 1 abgewandten Seite, vorzugsweise ein in Gewindeeingriff mit dem Bohrungshals 6 stehendes Festlegelement 12 vorgesehen. Das Festlegelement 12 ist bolzenförmig ausgebildet und kann ein Außengewinde aufweisen, das mit einem Innengewinde des Bohrungshalses 6 in Gewindeeingriff steht. Durch Eindrehen des Festlegelementes 12 in den Bohrungshals 6 werden die zwischen dem Festlegelement 12 und der Prallfläche 8 angeordneten Bauelemente 9, 10, 11 des Sensorelementes 3 verspannt bzw. in Axialrichtung zusammengedrückt, so dass sie in der Montagelage mechanisch und/oder elektrisch miteinander verbunden sind. Das Festlegelement 12 befindet sich in der Montagelage des Sensorelementes vorzugsweise in einer Arretierposition.

Das Festlegelement 12 dient als starrer Basiskörper, der in Montagerichtung R auf die sich anschließenden Bauelemente 8, 9, 10, 11 des Sensorelementes 3 drückt. Das Festlegelement 12 kann beispielsweise als ein Gewindebolzen, wie in Figur 4 dargestellt, oder als eine Überwurfmutter/-kappe ausgebildet sein.

Der Bohrungshals 6 weist über seine gesamte Länge einen konstanten Durchmesser auf, so dass die zu verpressenden Bauelemente des Sensorelementes 3, nämlich die Prallfläche 8, das Piezoelement 9, der Dämpfungskörper 10 und die Kontaktierungsscheibe 11 mit einer Passung eingesetzt werden können, so dass benachbarte Bauelemente des Sensorelementes 3 in der Montagelage flächig aneinanderliegen. Die einzuspannenden Bauelemente des Sensorelementes 3 weisen jeweils einen gleichen Außendurchmesser auf, so dass sie mit einer Passung in den Bohrungshals 6 einsetzbar sind. Der Bohrungshals 6 weist deswegen einen Innendurchmesser auf, der etwas größer ist als ein Außendurchmesser der einzuspannenden Bauelemente 8, 9, 10, 11 des Sensorelementes 3.

Zur Bereitstellung eines elektrischen Anschlusses für das Piezoelement 9, ohne dass das Messergebnis beeinträchtigt wird, besteht der Dämpfungskörper 10 vorzugsweise aus einem nachgiebigen bzw. flexiblen bzw. gummiartigen Material. Lediglich die leitfähigen Partikel in diesem Material sind nicht flexibel, sondern starr ausgebildet. Der Dämpfungskörper 10 ist scheibenförmig ausgebildet und weist ein zentrales erstes Verbindungselement 14 auf, das aus einem elektrischen leitenden Material besteht und kreisförmig ausgebildet ist. In radialer Richtung nach außen schließt sich an den ersten Verbindungselement 14 ein kreisringförmiges Gummielement 15 an, das gegenüber der Prallfläche 8 bzw. dem Piezoelement 9 dämpfend wirkt. Zugleich bildet das Gummielement 15 eine elektrische Isolierung zwischen dem ersten Verbindungselement 14 und einem sich in radialer Richtung nach außen anschließenden vorzugsweise kreisringförmigen zweiten Verbindungselement 16 des Dämpfungskörpers 10, das aus einem elektrisch leitenden Material besteht. Die Elemente 14, 15, 16 erstrecken sich im Wesentlichen als eine gemeinsame elastische Platte, die eine dämpfende Wirkung auf das Piezoelement ausüben.

Die Kontaktierungsscheibe 11 weist im zentralen Bereich ein kreisförmiges erstes Anschlusselement 17 auf, das aus einem elektrisch leitenden Material besteht. In radialer Richtung nach außen schließt sich ein kreisringförmiges Isolierelement 18 an, das vorzugsweise starr, aber auch nachgiebig ausgebildet sein kann. In radialer Richtung schließt sich an das Isolierelement 18 nach außen ein zweites Anschlusselement 19 an, das kreisringförmig und elektrisch leitend ausgebildet ist. Auf einer dem Inneren des Leitungsabschnitts 1 abgewandten Seite sind das erste Anschlusselement 17 und das zweite Anschlusselement 19 der Kontaktscheibe 11 mit nicht dargestellten elektrischen Zuführleitungen verbunden, die über einen Durchbruch 20 des Festlegelementes 12 nach außen geführt sind. Der Durchbruch 20 kann ein Innengewinde aufweisen, so dass die elektrische Zuführleitung an dem Festlegelement 12 verschraubt werden kann. Die Anschlussleitungen können mit einer nicht dargestellten Signalverarbeitungseinrichtung verbunden sein, so dass die Impulssignale des Piezoelementes 9 zur Zählung der auf die Prallfläche 8 auftreffenden Masseteilchen berechnet werden können. Bezüglich des Aufbaus der Signalverarbeitungseinrichtung wird auf die DE 10 2009 051 942 A1 verwiesen. Das erste Verbindungselement 14 des Dämpfungskörpers 10 weist vorzugsweise einen größeren Durchmesser d_{D1} auf als ein Durchmesser d_{K1} des ersten Anschlusselementes 17 der Kontaktierungsscheibe 11. Das erste Verbindungselement 14 überdeckt somit in der Montagelage das erste Anschlusselement 17 und ermöglicht eine sichere Kontaktierung. Zur Kurzschlussvermeidung ist der Durchmesser d_{K1} des ersten Anschlusselementes 17 kleiner als ein Innendurchmesser des Verbindungselementes 16 des Dämpfungskörpers 10. Ein Innendurchmesser des zweiten Anschlusselements 19 der Kontaktierungsscheibe 11 ist größer als ein Durchmesser d_{D1)} des ersten Verbindungselements 14 des Dämpfungskörpers 10 ausgebildet, so dass kein Kurzschluss entstehen kann. Ein Durchmesser d_{D1} des ersten Verbindungselements 14 des Dämpfungskörpers 10 ist kleiner als ein Innendurchmesser des zweiten Anschlusselementes 22 des Piezoelementes 9.

Die Prallfläche 8, das Piezoelement 9, der Dämpfungskörper 10 und die Kontaktierungsscheibe 11 bilden jeweils Einlegeteile, die in den Bohrungshals 6 eingesetzt und in der Montagelage verpresst angeordnet sind. Der Außendurchmesser aller Einlegeteile, in der Figur 5 mit d_{P2} (Piezoelement 9), d_{D2} (Dämpfungsplatte) und d_{K2} (Kontaktierungsscheibe 11) bezeichnet, ist an den Innendurchmesser des Bohrungshalses 6 angepasst. Die Einlegeteile 8, 9, 10, 11 können ohne Verkanten und quasi ohne Passung montagefreundlich eingelegt werden.

Im vorliegenden Ausführungsbeispiel ist ein Außendurchmesser d_{K2} des zweiten Anschlusselementes 19 gleich einem Außendurchmesser d_{D2} des zweiten Verbindungselementes 16. Ferner ist der Innendurchmesser d_{K2} des zweiten Anschlusselementes 19 gleich zu einem Innendurchmesser d_{D2} des zweiten Verbindungselementes 16. Das zweite Verbindungselement 16 und das zweite Anschlusselement 19 weisen somit die gleiche radiale Erstreckung auf. Dadurch, dass die Bauelemente des Sensorelementes 3, nämlich das Piezoelement 9, der Dämpfungskörper 10 und die Kontaktierungsscheibe 11 koaxial zueinander angeordnet sind, überdecken sich das zweite Verbindungselement 16 und das zweite Anschlusselement 19 der Kontaktierungsscheibe 11.

Das Piezoelement 9 weist auf einer dem Inneren des Leitungsabschnitts 1 abgewandten Seite ein vorzugsweise kreisförmiges erstes Anschlusselement 21 mit einem Durchmesser d_{P1} und ein sich in radialer Richtung anschließendes zweites Anschlusselement 22 mit einem Durchmesser d_{P2} auf, das kreisringförmig ausgestaltet ist. Die beiden Anschlusselemente 21, 22 sind selbstverständlich an ihrer Grenzfläche durch einen nicht dargestellten Isolierungsring voneinander elektrisch isoliert angeordnet. Das zweite Anschlusselement 22 liegt in der Montagelage elektrisch leitend an dem zweiten Verbindungselement 16 der Dämpfungsscheibe 10 an.

Der Durchmesser d_{D1} des Verbindungselementes 14 und der Durchmesser d_{K1} der Kontaktierungsscheibe 11 sind jeweils kleiner als der Durchmesser d_{P1} des ersten Anschlusselementes 21 des Piezoelementes 9.

Das Gummielement 15 bildet einen solchen radialen Zwischenraum zwischen dem ersten Verbindungselement 14 und dem zweiten Verbindungselement 16, so dass das erste Verbindungselement 14 nicht in Kontakt mit dem zweiten Anschlusselement 22 des Piezoelementes 9 kommen kann. Bspw. können entgegen der Montagerichtung R die inneren Kontaktierungsflächen bzw. Anschlussflächen der Einlegeteile 9, 10, 11 schichtweise reduziert ausgebildet sein. Es wird eine sichere Isolierung bei möglichst geringem Kontaktwiderstand geschaffen. Durch flächige Anlage der Anschlusselemente 17, 19, 21, 22 bzw. Verbindungselemente 14, 16 des Piezoelementes 9, des Dämpfungsträgers 10 und der Kontaktierungsscheibe 11 wird eine montagefreundliche und betriebssichere elektrische Anschlussführung des Piezoelementes 9 nach außen geschaffen.

Wie besonders gut aus Figur 4 ersichtlich ist, besteht der Leitungsabschnitt 1 aus dem Zuführungsabschnitt 31, dem stromabwärts gelegenen Weiterleitungsabschnitt 32 und dem zwischen denselben angeordneten Umlenkungsabschnitt 2. In einem Außenbereich 5 des winkelförmigen Umlenkungsabschnittes 2 ist der Bohrungshals 6 angeordnet. Der Zuführungsabschnitt 31 verjüngt sich in Strömungsrichtung S. Vorzugsweise ist der Zuführungsabschnitt 31 konusförmig unter Verringerung seines Querschnitts in Strömungsrichtung S ausgebildet. Wandungen des Zuführungsabschnitts 31 sind so geformt, dass die im Luftstrom geführten Masseteilchen bzw. Saatkörner unter einer im Vergleich zum geraden Leitungsabschnitt 1 erhöhten Geschwindigkeit auf die Prallfläche 8 treffen. Die Prallfläche 8 ist vorzugsweise eben ausgebildet. Eine Mittelachse M_{Z} des Zuführungsabschnitts 31 schließt einen spitzen Winkel α mit der Prallfläche 8 ein. Eine Mittelachse M_{W} des Weiterleitungsabschnitts 32 schließt einen spitzen Winkel β mit der Prallfläche 8 ein. Der Weiterleitungsabschnitt 32 weist in Strömungsrichtung S einen konstanten Durchmesser oder vorzugsweise einen sich in Strömungsrichtung S vergrößernden Durchmesser auf, so dass Druckverluste minimiert werden können.

Durch die verjüngende Ausbildung des Zuführungsabschnitts 31 wird eine gezielte Strömungsführung der Masseteilchen in Richtung der Prallplatte 8 bewirkt, so dass alle Masseteilchen nur ein einziges Mal mittels des Sensorelementes 3 detektiert werden. Die verjüngende Anordnung des Zuführungsabschnitts 31 bewirkt insbesondere, dass die Masseteilchen nur in einem bestimmten Winkelbereich um den Winkel α herum auf die Prallfläche 8 auftreffen und dann nur in einem bestimmten Winkelbereich um den Austrittswinkel β herum in Richtung des Weiterleitungsabschnitts 32 umgelenkt werden. Eine gezielte Umlenkung des die Masseteilchen enthaltenen Luftstroms mit einem Eintrittswinkelbereich und einem Austrittswinkelbereich bewirkt eine definierte Detektion der Masseteilchen, ohne dass sich Masseteilchen mit dem Luftstrom an der Prallfläche 8 vorbeibewegen.

Nach einer nicht dargestellten alternativen Ausführungsform kann der Umlenkwinkel ϕ zwischen dem Zuführungsabschnitt 31 und dem Weiterleitungsabschnitt 32 auch ein rechter Winkel oder ein spitzer Winkel sein.

Der Zuführungsabschnitt 31 verjüngt sich in Strömungsrichtung S über eine axiale Länge I, die in einem Bereich zwischen 3cm und 6cm liegen kann, von einem Innendurchmesser s1 gleich 30mm auf einen Innendurchmesser s2 von 20mm. Ein Verjüngungswinkel γ beträgt somit bei einer Länge I von 3cm etwa 9°. Vorzugsweise ist der Zuführungsabschnitt 31 so verjüngend ausgebildet, dass der Verjüngungswinkel γ in einem Bereich zwischen 4° und 10° liegt.

Vorzugsweise besteht der Bohrungshals 6 aus einem nachgiebigen Material. Auch der weitere Bestandteil des Leitungsabschnittes 1 einschließlich des Zuführungsabschnittes 31, des Weiterleitungsabschnittes 32 und des Umlenkungsabschnittes 32 besteht aus einem nachgiebigen Kunststoffmaterial. Vorteilhaft wird hierdurch verhindert, dass sich Körperschallschwingungen von einem stromaufwärts angeordneten Hauptstromverteiler in Richtung des Piezoelementes 9 ausbreiten können. Es findet hierdurch quasi eine Schwingungsentkopplung des Piezoelementes 9 bzw. der Prallplatte 8 zu dem Leitungsabschnitt 1 statt.

## Patentansprüche

1. Verfahren zur Regelung von auszubringenden Masseteilchen in Sämaschinen (51), wobei die Masseteilchen in einer Leitung (53) mittels eines Luftstromes zu einer Verteileinrichtung (56) geführt und dann auf mehrere Verteilleitungen (57) verzweigt werden, wobei eine Ist-Ausbringmenge (62) der Masseteilchen mittels einer Sensoreinrichtung (58) erfasst wird und als Sensorsignale einer Regeleinrichtung (61) zugeführt wird, in der eine Stellgröße (63) in Abhängigkeit von einer Soll-Ausbringmenge (65) bestimmt wird zur Beaufschlagung einer Dosiereinrichtung (59), mittels derer die Ist-Ausbringmenge (62) der Masseteilchen eingestellt wird,
- wobei ständig ein Korrekturfaktor (67) als Verhältnis aus Ist-Ausbringmenge (62) und Ist-Drehfrequenz (72) der Dosiereinrichtung (59) gebildet wird,
- wobei die Soll-Ausbringmenge (65) mit Hilfe eines Kalibrierfaktors (K) und des Korrekturfaktors (67) in eine Soll-Drehfrequenz (70) für die Dosiereinrichtung (59) umgewandelt wird, **dadurch gekennzeichnet,**
- **dass** ein Regler (69) der Regeleinrichtung (61) die auf die Dosiereinrichtung (59) wirkende Stellgröße (63) in Abhängigkeit von einer Regelabweichung (73) ermittelt, wobei die Regelabweichung (73) als Differenz zwischen der Soll-Drehfrequenz (70) und einer Ist-Drehfrequenz (72) der Dosiereinrichtung (59) bestimmt wird.

2. Verfahren nach Anspruch 1, **dadurch gekennzeichnet, dass** die Ist-Ausbringmenge (62) der Masseteilchen in der Leitung (53) und/oder in der Verteileinrichtung (56) und/oder in mindestens einer der Verteilleitungen (57) erfasst wird.

3. Verfahren nach Anspruch 1 oder 2, **dadurch gekennzeichnet, dass** die Ist-Ausbringmenge (65) durch Zählen von Masseteilchen-Impulsen in der Sensoreinrichtung (58) gemessen wird, wobei durch gemessene Zählabstände zwischen den Masseteilchen-Impulsen und/oder durch Vergleich von einer Anzahl von gezählten Masseteilchen pro Zeiteinheit ein Maß für die Verteilgenauigkeit in Fahrtrichtung einer Sämaschine geliefert wird.

4. Verfahren nach einem der Ansprüche 1 bis 3, **dadurch gekennzeichnet, dass** mittels der Dosiereinrichtung (59) ein Mengenanteil der Masseteilchen in dem Luftstrom eingestellt wird.

5. Verfahren nach Anspruch 4, **dadurch gekennzeichnet, dass** der Mengenanteil der Masseteilchen in dem Luftstrom durch Änderung einer Drehzahl eines Stellmotors (60) in der Dosiereinrichtung (59) und/oder eines Stellglieds zur Veränderung des Querschnitts der Verteilleitung (57) geregelt wird.

6. Vorrichtung zur Regelung von auszubringenden Masseteilchen in Sämaschinen mit einer Leitung zur Förderung der Masseteilchen von einem Saatgutspeicher (52) zu einer Verteileinrichtung (56), von der aus mehrere Verteilleitungen (57) zu Ausbringelementen führen, mit einer Dosiereinrichtung (59) zur Einstellung einer Ist-Ausbringmenge (62) der Masseteilchen, mit einer Regeleinrichtung (61) zur Ermittlung einer Stellgröße (63) für die Dosiereinrichtung (59) in Abhängigkeit von einer Soll-Ausbringmenge (65), wobei die Soll-Ausbringmenge (65) der Masseteilchen als eine Eingangsgröße der Regeleinrichtung (61) anliegt, wobei die Regeleinrichtung (61) eine Wandler- und/oder Verstärkereinheit (68) aufweist, mittels derer die Soll-Ausbringmenge (65) in eine für einen Regler (69) angepasste Führungsgröße umgewandelt wird, und wobei die Wandler- und/oder Verstärkereinheit (68) mit einem Kalibrierfaktor (K) zur Einstellung eines Startwertes für eine Soll-Drehfrequenz (70) zu Beginn eines Sävorganges sowie einem Korrekturfaktor (67) zur Korrektur des Kalibrierfaktors (K) während des Sävorganges beaufschlagbar ist, **dadurch gekennzeichnet, dass** eine Regelabweichung (73) aus einer Differenzbildung zwischen der Soll-Drehfrequenz (70) und der Ist-Drehfrequenz (72) der Dosiereinrichtung (59) ermittelbar ist, die als Eingang auf den Regler (69) anliegt, und dass der Regler (69) die Stellgröße (63) erzeugt, die an einen Eingang eines Stellmotors (60) der Dosiereinrichtung (59) übertragbar ist.

## Claims

1. A method for controlling mass particles to be distributed in seed drills (51), wherein the mass particles are delivered by means of an air stream in a conduit (53) to a distribution device (56) and then branched to a plurality of distribution lines (57), wherein an actual output quantity (62) of the mass particles is detected by means of a sensor device (58) and supplied as sensor signals to a control device (61), in which a control variable (63) is determined as a function of a target output quantity (65) for application to a metering device (59), by means of which the actual output quantity (62) of the mass particles is adjusted,
wherein
a correction factor (67) is continuously formed as the ratio of actual output quantity (62) and actual rotational frequency (72) of the metering device (59),
wherein
the target output quantity (65) is converted with the aid of a calibration factor (K) and the correction factor (67) into a target rotational frequency (70) for the metering device (59), **characterised in that**
- a controller (69) of the control device (61) establishes the control variable (63) acting on the metering device (59) as a function of a control deviation (73),
wherein
the control deviation (73) is determined as the difference between the target rotational frequency (70) and an actual rotational frequency (72) of the metering device (59).

2. The method according to Claim 1, **characterised in that** the actual output quantity (62) of the mass particles is detected in the conduit (53) and/or in the distribution device (56) and/or in at least one of the distribution lines (57).

3. The method according to Claim 1 or 2, **characterised in that** the actual output quantity (62) is measured by counting mass particle pulses in the sensor device (58), wherein a measure of the distribution accuracy in the direction of travel of a seed drill is supplied by means of measured counting intervals between the mass particle pulses and/or by comparing a number of counted mass particles per unit of time.

4. The method according to any one of Claims 1 to 3, **characterised in that** a proportion of the mass particles in the air stream is adjusted by means of the metering device (59).

5. The method according to Claim 4, **characterised in that** the proportion of the mass particles in the air stream is controlled by changing a rotational speed of a servomotor (60) in the metering device (59) and/or an actuator for varying the cross-section of the distribution line (57).

6. A device for controlling mass particles to be distributed in seed drills, having a conduit for conveying the mass particles from a seed store (52) to a distribution device (56), from which several distribution lines (57) lead to application elements, having a metering device (59) for adjusting an actual output quantity (62) of the mass particles, having a control device (61) for establishing a control variable (63) for the metering device (59) as a function of a target output quantity (65), wherein the target output quantity (65) of the mass particles is applied as an input to the control device (61), wherein the control device (61) has a converter and/or amplifier unit (68), by means of which the target output quantity (65) is converted into a command value adapted for a controller (69), and wherein the converter and/or amplifier unit (68) can be provided with a calibration factor (K) for setting an initial value of a target rotational frequency (70) at the beginning of a sowing process, as well as a correction factor (67) for correcting the calibration factor (K) during the sowing process, **characterised in that** a control deviation (73) can be established from the difference between the target rotational frequency (70) and the actual rotational frequency (72) of the metering device (59), which is applied as an input to the controller (69), and the controller produces the control value (63) which can be transmitted to an input of a servomotor (60) of the metering device (59).

## Revendications

1. Procédé de régulation de particules de semence dans des semoirs (51), sachant que les particules sont amenées, par le biais d'une conduite (53), à un dispositif de répartition (56), au moyen d'un flux d'air, et sont dérivées ensuite sur plusieurs conduites de répartition (57), sachant qu'une quantité de particules à épandre réelle (62) est saisie au moyen d'un dispositif de captage (58) et communiquée, sous la forme de signaux de capteur, à un dispositif de réglage (61), dans lequel une grandeur de réglage (63) est déterminée en fonction d'une quantité à épandre de consigne (65), pour commander le dispositif de dosage (59), au moyen duquel la quantité de particules à épandre réelle (62) est réglée,
- sachant qu'un facteur de correction (67) est continuellement formé en tant que rapport entre la quantité de particules à épandre réelle (62) et la fréquence de rotation réelle (72) du dispositif de dosage (59),
- sachant que la quantité à épandre de consigne (65) est convertie, au moyen d'un facteur de calibrage (K) et du facteur de correction (67), en une fréquence de rotation de consigne (70) pour le dispositif de dosage (59), **caractérisé en ce que**
- un régleur (69) du dispositif de réglage (61) détermine, en fonction d'une divergence de réglage (73), la grandeur de réglage (63) qui agit sur le dispositif de dosage (59),
- sachant que la divergence de réglage (73) est définie comme différence entre la fréquence de rotation de consigne (70) et une fréquence de rotation réelle (72) du dispositif de dosage (59).

2. Procédé selon la revendication 1, **caractérisé en ce que** la quantité de particules à épandre réelle (62), dans la conduite (53), et / ou au moins l'une des conduites de répartition (57) est saisie.

3. Procédé selon revendication 1 ou 2, **caractérisé en ce que** la quantité à épandre réelle (62) est mesurée par comptage d'impulsions de particules dans le dispositif de captage (58), sachant que, en fonction des intervalles de comptage mesurés entre les impulsions de particules et / ou de la comparaison d'un nombre de particules comptées par unité de temps, une mesure est délivrée pour la précision de répartition dans la direction de marche d'un semoir.

4. Procédé selon l'une des revendications 1 à 3, **caractérisé en ce que**, au moyen du dispositif de dosage (59), une part quantitative de particules est réglée dans le flux d'air.

5. Dispositif selon la revendication 4, **caractérisé en ce que** la part quantitative de particules dans le flux d'air est réglée par modification de la vitesse de rotation d'un servomoteur (60) dans le dispositif de dosage (59) et / ou d'un organe de réglage pour la modification de la section transversale de la conduite de répartition (57).

6. Dispositif de régulation de particules de semence dans un semoir, avec une conduite destinée au convoyage des particules à partir d'un réservoir de semences (52) jusqu'à un dispositif de répartition (56), à partir duquel plusieurs conduites de répartition (57) conduisent à des éléments d'épandage, avec un dispositif de dosage (59) pour le réglage d'une quantité de particules à épandre réelle (62), avec un dispositif de réglage (61) pour la détermination d'une grandeur de réglage (63) pour le dispositif de dosage (59), en fonction d'une quantité à épandre de consigne (65), sachant que la quantité de particules à épandre de consigne (65) est appliquée en tant que grandeur d'entrée du dispositif de réglage (61), sachant que le dispositif de réglage (61) présente une unité de conversion et / ou d'amplification, au moyen de laquelle la quantité à épandre de consigne (65) est convertie en une grandeur de conduite, adaptée à un régleur (69), et
sachant que l'unité de conversion et / ou d'amplification (68) est soumise à un facteur de calibrage (K) pour le réglage d'une valeur de départ pour une fréquence de rotation de consigne (70) au début d'une opération d'ensemencement, ainsi qu'à un facteur de correction (67) pour la correction du facteur de calibrage (K) pendant l'opération d'ensemencement, **caractérisé en ce qu'**est déterminée une divergence de réglage (73), basée sur la formation d'une différence entre la fréquence de rotation de consigne (70) et la fréquence de rotation réelle (72) du dispositif de dosage (59), laquelle est appliquée au régleur (69) en tant qu'entrée, et que le régleur (69) génère la grandeur de réglage (63), qui peut être transmise à une entrée d'un servomoteur (60) du dispositif de dosage (59).
